# EUROPEAN PATENT APPLICATION

(11) **EP 4 768 117 A1**
(43) Date of publication of application: **01.07.2026**
(21) Application number: 25227724.9
(22) Date of filing: 30.12.2025
(51) Int. Cl.: B01D 53/62, C04B 40/02

(54) **CARBONATION SYSTEM AND METHOD COMPRISING CARBONATION CELL**

(30) Priority: 30.12.2024 TR 2024021493
(71) Applicant: Bastas-Baskent Cimento Sanayi ve Ticaret Anonim Sirketi, Ankara (TR)
(72) Inventor: DOGAN AYSEMIN, Elif, Ankara (TR); ARSLAN ÇAGATAY, Alp, Ankara (TR); YIGIT, Ahmet, Ankara (TR)
(74) Representative: Yamankaradeniz, Kemal

(57) **Abstract**

The invention relates to a carbonation system comprising a carbonation cell made of monolithic, cylindrically shaped metallic material (preferably stainless-steel), capable of withstanding pressures up to 100 bar, for binding carbon dioxide to mineral-based materials in powder or sand form. The carbonation cell includes a cell lid (2) and a gas valve (3) that allows both gas inlet and outlet through a single fluid line, a pneumatic hose (4) for gas transfer between the carbonation cell and a CO₂ source (6), and a manometer (5) for measuring gas pressure. The CO₂ source (6) stores the CO₂ gas to be delivered into the carbonation cell body (1). In the carbonation process, to remove air from inside the cell, CO₂ gas is introduced and released through the same single line in preferably three successive purging cycles. Afterward, the system pressure is brought to the target pressure, and carbonation of the mineral material is achieved.

The system is designed for carrying out accelerated carbonation reactions in mineral-based materials independently of applications performed with fresh cement or concrete mortar.

## Description

### Technical Field

The invention relates to a carbonation system and the carbonation method conducted with this system, comprising a carbonation cell that enables the production of mineral additives for low-carbon blended cement by binding carbon dioxide to mineral-based materials used in the construction materials sector, particularly concrete, brick, slag, and serpentine.

### State of the Art

In current practices, carbonation is generally carried out through natural processes or accelerated methods. Accelerated carbonation reactors are typically designed as pressurized systems, closed chambers, or fixed-bed configurations. In these systems, the CO₂ uptake efficiency is limited depending on the gas-solid contact surface area and the type of material.

In the state of the art, the use of carbon dioxide in certain applications is applied to fresh concrete or fresh mortar systems, where CO₂ is mainly considered within the framework of a CO₂-curing approach that occurs simultaneously with, or influences, the cement hydration process.

Such systems are technically different from accelerated carbonation processes based on the substitution of hydrates or free metal oxides present in pre-existing mineral phases by CO₂, or on direct carbonation reactions.

The drawbacks of present applications can be listed as follows:
1. **Gas-Material Interaction Efficiency:** In fixed bed or closed chamber systems, the effective contact of the gas with the material is limited. This reduces the carbonation efficiency.
2. **Operational Challenges:** Pressurized systems are costly and carry sealing and security risks.
3. **Energy Intensity:** Present systems often require high energy requirements and increase carbon footprint.

Technical problems experienced in the present applications can be listed as follows:
- Since homogeneous CO₂ binding to the material structure cannot be achieved, carbonation processes are slow and inefficient.
- Especially in fine particle materials, gas passage is limited, which prevents homogeneous carbonation.
- The systems used generally do not offer industrial-scale scalability or the ability to perform precise testing under laboratory conditions.

As a result, due to the drawbacks described above and the inadequacy of existing solutions on the subject, it has become necessary to make a development in the relevant technical field.

### Object of the Invention

The invention is inspired by the current situation and aims to solve the above-mentioned negativities.

An object of the invention is to provide a carbonation system comprising a compact carbonation cell that is resistant to 100 bar pressure, can operate at high temperatures and provides homogeneous carbonation. The carbonation cell, which is the subject of the invention, solves existing technical problems by ensuring that the material and gas interact effectively under high pressure and temperature conditions.

Another object of the invention is to enable accelerated carbonation reactions based on the substitution of hydrate phases present in pre-existing mineral-based materials by CO₂, or on the binding of CO₂ to free oxides, in contrast to CO₂ curing methods applied to fresh mortar or fresh concrete systems.

Another object of the invention is to be resistant to high pressure (100 bar pressure) thanks to the steel structure and, thanks to this feature, to accelerate carbonation.

Another object of the invention is that it can operate under high temperature conditions, which increases the material and gas interaction efficiency.

Another object of the invention is to provide a simple and safe gas management scheme that enables the removal of air from within the carbonation cell through successive CO₂ purging cycles by using a single inlet/outlet line and a single gas valve.

Another object of the invention is to provide a pneumatically gas-controlled carbonation cell, wherein gas inlet and outlet are achieved via a valve configured for both gas inflow and outflow and a pneumatic hose allowing gas entry to and exit from the cell through the gas port located on the lid. This configuration facilitates the use of gas at the desired pressure and purity.

Another object of the invention is its compact design. The carbonation cell, which is approximately 15 cm long and 13 cm in diameter, is suitable for laboratory-scale tests.

Another object of the invention is to have a user-friendly structure. The carbonation cell, which is the subject of the invention, has a cover for placing material and has a material capacity of approximately 150-200 grams. This allows efficient carbonation experiments to be performed with small amounts of samples.

The design of the carbonation cell, which is the subject of the invention, accelerates the carbonation process and increases efficiency by ensuring that the gas interacts homogeneously with the material under high pressure and temperature conditions. In addition, thanks to its compact and durable structure, it reduces energy consumption and offers a solution suitable for working with various types of gas.

Another object of the invention is to contribute to the reduction of carbon emissions by effectively binding CO₂ in flue gas through the carbonation cell. This technology supports environmental sustainability goals in the cement and concrete sector.

Another object of the invention is that the carbonation cell can operate with CO₂ gases of different purities, making it compatible with both industrial flue gases and pure laboratory gases.

Another object of the invention is to offer a wide range of applications, as it can be used for the carbonation of various mineral-based materials such as concrete, cement, brick, slag and serpentine.

Another object of the invention is to minimize energy consumption thanks to its compact and durable design, thus providing an economical solution for laboratory and pilot scale applications.

Another object of the invention is to enable the integration of the concrete cell into large-scale industrial processes thanks to its scalable structure.

Another object of the invention is that the cell design can be improved with automation, data monitoring sensors and artificial intelligence-based control systems in the future.

**In** order to achieve the above-mentioned objects, the developed invention relates to a carbonation system that enables the production of mineral additives for blended cement by binding carbon dioxide to mineral-based materials, comprising:
- a carbonation cell having:
   - a carbonation cell body made of metallic material, monolithically manufactured and resistant to internal pressures of up to 100 bar, the carbonation cell body defining an inner chamber where the mineral based material in powder or sand form to be carbonated and CO₂ are introduced, thereby enabling CO₂ to bind to the mineral structure of the material,
   - carbonation cell lid made of metallic material and removably mounted on the carbonation cell body, the carbonation cell lid providing gas tightness and allowing loading and unloading of material into and from the carbonation cell body,
   - a gas valve (for example operable in a bidirectional manner) positioned on the upper side of the carbonation cell lid, allowing gas flow into and out of the carbonation cell body through a single fluid line,
- CO₂ source in which the CO₂ gas to be delivered to the carbonation cell body is stored,
- a flexible, high-pressure-resistant pneumatic hose that provides gas transfer between the CO₂ source and the carbonation cell, and that is connected to the valve allowing gas inlet to and outlet from the CO₂ source and the carbonation cell, and
- a manometer that measures the gas pressure during the transfer of CO₂ gas in the pneumatic hose between the CO₂ source and the carbonation cell.

A preferred embodiment of the invention comprises a temperature sensor that measures the gas temperature during the CO₂ gas transfer in the pneumatic hose between the CO₂ source and the carbonation cell, and a control panel that transmits the temperature measured by the temperature sensor and has a screen where the temperature can be displayed.

According to an embodiment of the invention, the carbonation cell body and the carbonation cell lid are made of stainless steel.

According to an embodiment of the invention, the carbonation cell body is cylindrically shaped.

According to an embodiment of the invention, the CO₂ source is a CO₂ cylinder.

The present invention also relates to carbonation method for enabling the binding of carbon dioxide to mineral-based materials in order to obtain new mineral additives for blended cement production, characterized by comprising the steps of:
- placing a mineral-based material in powder or sand form into a carbonation cell body of a carbonation cell, the carbonation cell body being monolithic, made of metallic material and capable of withstanding pressures of up to 100 bar,
- closing the carbonation cell body with a carbonation cell lid,
- after closing the carbonation cell, removing the air inside the carbonation cell by introducing CO₂ gas through a same single inlet/outlet line and a same valve and then releasing it, repeated consecutively for multiple successive purging cycles, and for example for at least three successive purging cycles,
- after the multiple purging cycles, introducing CO₂ gas into the carbonation cell to bring the system to a desired pressure, not exceeding 50 bar,
- maintaining the carbonation cell under the desired pressure for a predetermined period , to enable carbonation of the mineral-based material,
- after completion of the carbonation process, reducing the pressure in the carbonation cell in a controlled manner through the same single inlet/outlet line.

According to an embodiment of the invention, the predetermined period varies according to chemical and mineralogical composition of the material.

The structural and characteristic features of the invention and all its advantages will be understood more clearly by means of the figures given below and the detailed description written by making references to these figures, and therefore the evaluation needs to be made by taking these figures and detailed description into consideration.

### Figures to Help Understand the Invention

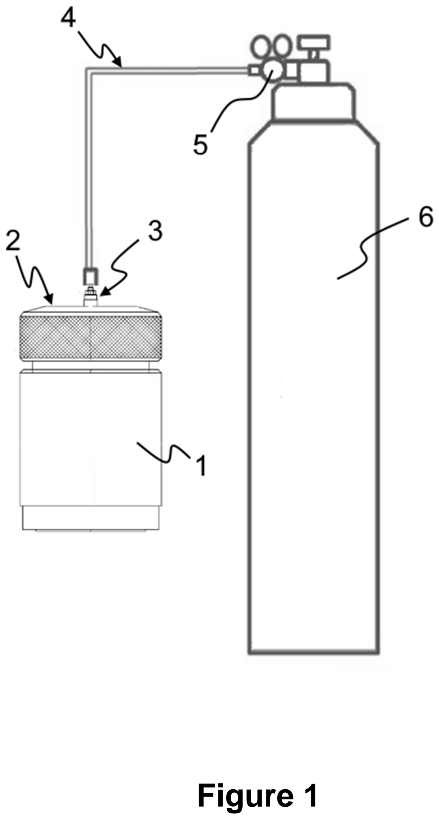

**Figure 1** is a representative two-dimensional view of the carbonation system comprising the carbonation cell which is the subject of the invention.

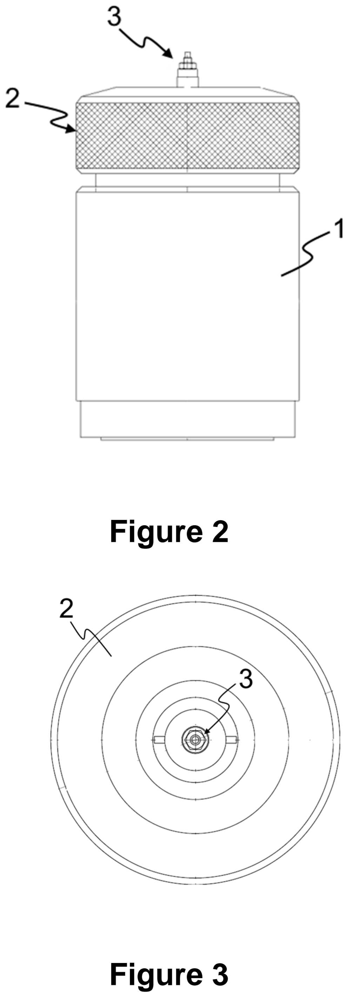

**Figure 2** is a two-dimensional side view of the carbonation cell included in the carbonation system according to the invention, showing the cell body, the cell lid, and the valve allowing gas inlet and outlet.
**Figure 3** is a two-dimensional top view of the carbonation cell included in the carbonation system according to the invention, showing the cell body, the cell lid, and the valve allowing gas inlet and outlet.

### Description of Piece References

**1.** Carbonation cell body
**2.** Carbonation cell lid
**3.** Gas valve
**4.** Pneumatic hose
**5.** Manometer
**6.** CO₂ cylinder

### Detailed Description of the Invention

In this detailed description, preferred embodiments of the carbonation system comprising the carbonation cell which is the subject of the invention are described only for the purpose of better understanding the subject.

The invention relates to a carbonation system comprising a carbonation cell that enables the production of low carbon emission blended cement to obtain mineral additives by binding carbon dioxide to mineral-based materials such as concrete, brick, slag and serpentine, used in the construction materials industry.

A preferred embodiment of the carbonation system comprising the carbonation cell which is the subject of the invention comprises the following elements:
- carbonation cell body (1),
- carbonation cell lid (2),
- a gas valve (3) allowing gas inlet and outlet,
- pneumatic hose (4),
- manometer (5),
- CO₂ source (6)

In the mentioned configuration of the carbonation system, the characteristics of the elements are as follows:
- Carbonation cell body (1) is a preferably monolithic, cylindrically shaped metallic material (preferably stainless-steel) structure manufactured without joints or flanges, which surrounds an inner chamber in which the material to be carbonated (in particular mineral-based materials such as concrete, brick, slag, and serpentine) is treated with gas, and which holds the carbonation cell lid (2). Owing to this configuration, leak-tightness and mechanical strength under high pressure are ensured.
- The carbonation cell lid (2) is a cylindrically shaped component made of metallic material (preferably stainless-steel), designed to provide gas tightness, to allow loading and unloading of material into and from the carbonation cell body (1), and to withstand elevated temperatures and internal pressures of up to 100 bar.
- The gas valve (3) allowing gas inlet and outlet is in the nature of a valve, preferably operable in a bidirectional manner, which enables both gas inlet and gas outlet between the carbonation cell and an external CO₂ source through a single fluid line. Said valve allows controlled and sequential execution of the gas inlet and outlet operations. The gas valve (3) is positioned on the upper side of the carbonation cell lid (2). The aforementioned carbonation cell body (1), carbonation cell lid (2), and the gas valve (3) together constitute the carbonation cell.
- The pneumatic hose (4) is preferably flexible and resistant to high pressure and is selected so as to allow gas inlet and outlet through a single gas line. The pneumatic hose (4) enables gas transfer between the CO₂ source (6) and the carbonation cell.
- manometer (5) measures the gas pressure during the transfer of CO₂ gas in the pneumatic hose (4) between the CO₂ source (6) and the carbonation cell.
- CO₂ source (6) is a pressure-resistant laboratory or industrial type cylinderin which CO₂ of various purities can be stored.

The carbonation system comprising the carbonation cell, which is the subject of the invention, is a compact device that performs the accelerated carbonation process by optimizing the gas pressure and temperature. The carbonation process is carried out as follows:
1. The carbonation cell lid (2) is opened, and preferably 150-200 grams of material are placed into the inner chamber of the carbonation cell body (1). The material to be carbonated, placed inside the carbonation cell body (1), is preferably selected from mineral-based materials ground to powder or sand size (<4 mm). The carbonation cell lid (2) is then tightly closed, ensuring gas tightness.
2. The pneumatic hose (4) is connected to the gas valve (3), and through this valve, CO₂ gas of the desired purity is supplied in a controlled manner from the CO₂ source (6) into the carbonation cell body (1) by slowly releasing the pressured gas inside the carbonation cell body (1). While CO₂ gas of the desired purity is being introduced from the CO₂ source (6) into the carbonation cell body (1), the manometer (5) monitors the pressure during gas transfer between the CO₂ source (6) and the carbonation cell. Carbonation process pressure is adjusted according to materials' properties, which are identified according to chemical and mineralogical tests. Preferably, the carbonation pressure is maintained so as not to exceed 50 bar.
3. The gas interacts homogeneously with the material. Pressure (up to 50 bar) and temperature conditions accelerate the carbonation reaction and ensure that CO₂ is bound in the mineral structure of the material.
4. When the carbonation process is completed (the material is characterized by drawing a time-dependent carbonation graph, and in this way, it is understood that the carbonation process is complete), the gas pressure from the CO₂ source (6) is slowly reduced. The pneumatic hose (4) is removed, and the cell is made safe.
5. The carbonation cell lid (2) is opened, and the carbonated material is removed and made ready for use.

Advantageously, during step 3 and prior to the carbonation reaction, in order to remove the atmospheric air from the carbonation cell, CO₂ gas is introduced into the carbonation cell and then released back through the same single inlet/outlet line and the same gas valve (3). This operation is repeated in multiple successive cycles to displace the air inside the carbonation cell with CO₂, In this way, the oxygen and nitrogen content within the carbonation cell is reduced, creating a CO₂-rich atmosphere suitable for the carbonation reaction. After completing for example three purging cycles, CO₂ gas is introduced into the cell through the same line to bring the system to the target pressure, not exceeding 100 bar and for example not exceeding 50 bar. The carbonation cell is maintained under this pressure for a predetermined period to allow the carbonation reaction to occur. At the end of the process, the pressure is released in a controlled manner through the same single line.

The carbonization system, which is the subject of the invention may, in an alternative application, also comprise a temperature sensor to measure the gas temperature and a control panel having a screen to which the temperature sensor transmits the temperature measured and where the temperature can be displayed.

The carbonization cell, which is the subject of the invention, provides a safe process environment with its pressure and temperature resistant stainless-steel structure and increases carbonation efficiency.

The carbonation cell which is the subject of the invention has been developed as a stand-alone laboratory device, but in industrial applications the carbonation cell can be integrated to be combined with a gas line, pneumatic gas distribution system and control panel

The carbonation cell of the invention can be placed on a laboratory workbench or in a pilot-scale experimental setup. However, it can be used as a modular part of a larger carbonation system. For example, it can take CO₂ from the flue gas line and react this gas directly with the material.

The carbonation process of the present invention, unlike CO₂ curing processes applied to fresh mortar or fresh concrete systems, is not carried out in an environment where binder hydration reactions are ongoing. Instead, in the context of this invention, carbonation is based on an accelerated carbonation reaction in which the hydrate phases and/or free metal oxides present in pre-existing mineral-based materials are converted into carbonate phases or displaced by CO₂ under a high-pressure CO₂ atmosphere.

## Claims

1. A carbonation system for producing mineral additives for blended cement by binding carbon dioxide to mineral-based materials, the carbonation system comprising:
- a carbonation cell having:
• a carbonation cell body (1) made of metallic material, monolithically manufactured and resistant to internal pressures of up to 100 bar, the carbonation cell body (1) defining an inner chamber where the mineral based material in powder or sand form to be carbonated and CO₂ are introduced, thereby enabling CO₂ to bind to the mineral structure of the material,
• a carbonation cell lid (2) made of metallic material and removably mounted on the carbonation cell body (1), the carbonation cell lid (2) providing gas tightness and allowing loading and unloading of material into and from the carbonation cell body (1),
• a gas valve (3) positioned on the upper side of the carbonation cell lid (2), allowing gas flow into and out of the carbonation cell body (1) through a single fluid line,
- a CO₂ source (6) in which the CO₂ gas to be delivered to the carbonation cell body (1) is stored,
- a flexible, high-pressure-resistant pneumatic hose (4) that provides gas transfer between the CO₂ source (6) and the carbonation cell, and that is connected to the gas valve (3) allowing gas inlet to and outlet from the CO₂ source (6) and the carbonation cell, and
- a manometer (5) that measures the gas pressure during the transfer of CO₂ gas in the pneumatic hose (4) between the CO₂ source (6) and the carbonation cell.

2. The system according to claim 1, wherein it comprises a control panel including a temperature sensor for measuring the gas temperature during CO₂ transfer through the pneumatic hose (4) between the CO₂ source (6) and the carbonation cell, and a display for receiving and showing the temperature measured by the temperature sensor.

3. The system according to claim 1 or 2, wherein the carbonation cell body (1) and the carbonation cell lid (2) are made of stainless steel.

4. The system according to any one of claims 1 to 3, wherein the carbonation cell body (1) is cylindrically shaped.

5. The system according to any one of claims 1 to 4, wherein the CO₂ source (6) is a CO₂ cylinder.

6. A carbonation method for enabling the binding of carbon dioxide to mineral-based materials, in order to obtain new mineral additives for blended cement production, **characterized by** comprising the steps of:
- placing a mineral-based material in powder or sand form into a carbonation cell body (1) of a carbonation cell, the carbonation cell body (1) being monolithic, made of metallic material and capable of withstanding pressures of up to 100 bar,
- closing the carbonation cell body (1) with a carbonation cell lid (2),
- after closing the carbonation cell, removing the air inside the carbonation cell by introducing CO₂ gas through a same single inlet/outlet line and a same valve and then releasing it, repeated consecutively for multiple successive purging cycles,
- after the multiple purging cycles, introducing CO₂ gas into the carbonation cell to bring the system to a desired pressure,
- maintaining the carbonation cell under the desired pressure for a predetermined period, to enable carbonation of the mineral-based material,
- after completion of the carbonation process, reducing the pressure in the carbonation cell in a controlled manner through the same single inlet/outlet line.

7. A carbonation method according to claim 6, **characterized in that** CO₂ is introduced to bring the system to a pressure value not exceeding 50 bar, in the step of:
- after the multiple purging cycles, introducing CO₂ gas into the carbonation cell to bring the system to a desired pressure.
